(19) Europäisches Patentamt
European Patent Office
Office européen des brevets

(11) **EP 4 775 945 A1**

(12) **EUROPEAN PATENT APPLICATION**
published in accordance with Art. 153(4) EPC

(43) Date of publication:
**15.07.2026 Bulletin 2026/29**

(21) Application number: **24871358.8**

(22) Date of filing: **16.05.2024**

(51) International Patent Classification (IPC):
*G01M 1/22* (2006.01)

(52) Cooperative Patent Classification (CPC):
**G01M 1/22**

(86) International application number:
**PCT/JP2024/018167**

(87) International publication number:
**WO 2025/069547 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 JP 2023167667**

(71) Applicant: **IHI Corporation**
**Tokyo 135-8710 (JP)**

(72) Inventors:
• **ISHIMOTO, Koshi**
**Tokyo 135-8710 (JP)**
• **TAKAZAKURA, Toyoki**
**Tokyo 135-8710 (JP)**

(74) Representative: **TBK**
**Bavariaring 4-6**
**80336 München (DE)**

(54) **METHOD FOR OBTAINING BALANCE CORRECTION INFORMATION AND DEVICE FOR ACQUIRING BALANCE CORRECTION INFORMATION**

(57) A method of obtaining balance correction information includes: obtaining first vibration data when a rotating body is rotating at a specific rotational speed without trial cutting being performed; obtaining second vibration data when the rotating body is rotating at a low-range rotational speed lower than the specific rotational speed without trial cutting being performed; obtaining third vibration data when the rotating body on which trial cutting has been performed at a first correction position is rotating at the specific rotational speed; obtaining a first influence coefficient indicating a degree of an effect that the trial cutting has on vibration of the rotating body, using the first vibration data and the third vibration data; obtaining runout information indicating a degree of runout caused by a shape of the rotating body, using the second vibration data; and obtaining balance correction information using the first vibration data, the influence coefficient, and the runout information.

*Fig.2*

START

APPLY DRIVING FORCE TO ROTATING BODY — S10

OBTAIN FIRST VIBRATION DATA BASED ON FIRST CONDITION — S11

STOP DRIVING FORCE APPLIED TO ROTATING BODY — S12

OBTAIN SECOND VIBRATION DATA BASED ON SECOND CONDITION — S13

OBTAIN RUNOUT INFORMATION — S14

OBTAIN THIRD VIBRATION DATA BASED ON THIRD CONDITION — S15

OBTAIN FOURTH VIBRATION DATA BASED ON FOURTH CONDITION — S16

OBTAIN INFLUENCE COEFFICIENT — S17
OBTAIN FIRST INFLUENCE COEFFICIENT — S17a
OBTAIN SECOND INFLUENCE COEFFICIENT — S17b

OBTAIN UNBALANCE INFORMATION — S18

CORRECT ROTATING BODY — S19

ROTATE CORRECTED ROTATING BODY AT THE SPECIFIC ROTATIONAL SPEED — S20

SATISFY CRITERION? — S21
NO
YES

END

## Description

## Technical Field

The present disclosure relates to a method of obtaining balance correction information and an apparatus for obtaining balance correction information.

## Background Art

When vibration of a rotating body rotating at a high speed is measured using a vibrometer, vibration data is obtained. Non-uniformity of mass distribution around the axis of rotation of the rotating body is a cause of dynamic unbalance. The above-mentioned vibration data includes a vibration component caused by dynamic unbalance. Furthermore, the vibration data may include other vibration components due to factors different from the vibration component caused by dynamic unbalance. For example, as one of the other vibration components due to the factors different from the vibration component caused by dynamic unbalance, there is a component that makes it appear as if the rotating body is vibrating, due to the outer shape of the rotating body. Such a phenomenon is referred to as runout.

For example, Patent Literature 1 discloses a rotating machine testing apparatus. The testing apparatus of Patent Literature 1 determines the amount of shape irregularity when the rotating body is stationary as a runout amount. Then, the amount of shape irregularity at the rotational speed during operation is determined from the runout amount. By subtracting the amount of shape irregularity during operation from the vibration that occurs during operation and is synchronized with the rotation, highly accurate vibration characteristics can be obtained.

## Citation List

## Patent Literature

[Patent Literature 1] Japanese Unexamined Patent Application Publication No. H7-270229

## Summary of Invention

## Technical Problem

To correct the dynamic balance of the rotating body, it is necessary to accurately determine the vibration component caused by dynamic unbalance. As also shown in Patent Literature 1, vibration data obtained using a vibrometer may include an apparent vibration component caused by runout. As described above, the apparent vibration component caused by runout is not a vibration component due to dynamic unbalance. Therefore, it is necessary to subtract the apparent vibration component caused by runout from the vibration data obtained using the vibrometer. Several methods for subtracting the apparent vibration component caused by runout have been proposed, including the one in Patent Literature 1. However, in the art, there has been a demand for a technology that can easily obtain highly accurate balance correction information based on vibration data from which the apparent vibration component caused by runout has been subtracted.

The present disclosure provides a method of obtaining balance correction information and an apparatus for obtaining balance correction information that are capable of easily obtaining highly accurate balance correction information.

## Solution to Problem

One aspect of the present disclosure is a method of obtaining balance correction information for correcting a dynamic unbalance of a rotating body rotatably supported by a non-contact type bearing and rotating about an axis of rotation. The method of obtaining balance correction information comprises: obtaining first vibration data along a direction intersecting the axis of rotation, when the rotating body is rotating at a specific rotational speed without a trial weight being applied to the rotating body and without trial cutting being performed on the rotating body; obtaining second vibration data along a direction intersecting the axis of rotation, when the rotating body is rotating at a low-range rotational speed lower than the specific rotational speed without the trial weight being applied to the rotating body and without the trial cutting being performed on the rotating body; obtaining third vibration data along a direction intersecting the axis of rotation, when the rotating body to which the trial weight has been applied at a first correction position is rotating at the specific rotational speed, or when the rotating body on which the trial cutting has been performed at the first correction position is rotating at the specific rotational speed; obtaining a first influence coefficient indicating a degree of an effect that the application of the trial weight or the performance of the trial cutting has on vibration of the rotating body, using the first vibration data and the third vibration data; obtaining runout information indicating a degree of runout caused by a shape of the rotating body, using the second vibration data; and obtaining the balance correction information using the first vibration data, the first influence coefficient, and the runout information.

Another aspect of the present disclosure is an apparatus for obtaining balance correction information for correcting a dynamic unbalance of a rotating body rotatably supported by a non-contact type bearing and rotating about an axis of rotation. The apparatus for obtaining balance correction information comprises: a vibration data obtaining unit configured to receive: first vibration data along a direction intersecting the axis of rotation, when the rotating body is rotating at a specific rotational speed without a trial weight being applied to the rotating body and without trial cutting being performed on the rotating body; second vibration data along a direction intersecting the axis of rotation, when the rotating body is rotating at a low-range rotational speed lower than the specific rotational speed without the trial weight being applied to the rotating body and without the trial cutting being performed on the rotating body; and third vibration data along a direction intersecting the axis of rotation, when the rotating body to which the trial weight has been applied at a first correction position is rotating at the specific rotational speed, or when the rotating body on which the trial cutting has been performed at the first correction position is rotating at the specific rotational speed; an influence coefficient obtaining unit configured to obtain a first influence coefficient indicating a degree of an effect that the application of the trial weight or the performance of the trial cutting has on vibration of the rotating body, using the first vibration data and the third vibration data; a runout information obtaining unit configured to obtain runout information indicating a degree of runout caused by a shape of the rotating body, using the second vibration data; and a balance correction information obtaining unit configured to obtain the balance correction information using the first vibration data, the first influence coefficient, and the runout information.

According to the method of obtaining balance correction information and the apparatus for obtaining balance correction information, runout information is obtained using the second vibration data along a direction intersecting the axis of rotation when the rotating body is rotating at a low-range rotational speed lower than the specific rotational speed without a trial weight being applied to the rotating body and without trial cutting being performed on the rotating body. By doing so, balance correction information can be obtained even with one less unknown variable than in the related art. As a result, the balance correction information can be obtained with a smaller number of measurement data. Therefore, highly accurate balance correction information that takes runout into account can be easily obtained with a smaller number of measurement data.

In the step of obtaining the first vibration data of the method of obtaining balance correction information of one aspect, the first vibration data may be acquired by applying a predetermined driving force to the rotating body to bring the rotating body into a forced rotation state of rotating at the specific rotational speed. The step of obtaining the second vibration data may be performed after the step of obtaining the first vibration data, and the second vibration data may be acquired by stopping application of the predetermined driving force that was applied in the step of obtaining the first vibration data to bring the rotating body into a free rotation state in which the rotational speed of the rotating body gradually decreases. By these steps, accurate runout information can be obtained.

The method of obtaining balance correction information of one aspect may further comprise: obtaining fourth vibration data along a direction intersecting the axis of rotation, when the rotating body to which the trial weight has been applied at a second correction position different from the first correction position is rotating at the specific rotational speed, or when the rotating body on which the trial cutting has been performed at the second correction position is rotating at the specific rotational speed; and obtaining a second influence coefficient indicating a degree of an effect that the application of the trial weight or the performance of the trial cutting has on vibration of the rotating body, using the third vibration data and the fourth vibration data. By these steps, so-called two-plane balancing can be performed as the correction of the rotational balance.

In the method of obtaining balance correction information of one aspect, the specific rotational speed may be higher than a levitation rotational speed at which the rotating body levitates from the bearing. The low-range rotational speed may be lower than the levitation rotational speed. Accurate runout information can also be obtained under these conditions.

In the method of obtaining balance correction information of one aspect, the specific rotational speed may be higher than a primary critical rotational speed of the rotating body. The low-range rotational speed may be lower than the primary critical rotational speed of the rotating body. Accurate runout information can also be obtained under these conditions.

**Effects of Invention**

According to the present disclosure, a method of obtaining balance correction information and an apparatus for obtaining balance correction information that are capable of easily obtaining highly accurate balance correction information are provided.

**Brief Description of Drawings**

FIG. 1 is a diagram schematically illustrating a state in which balance correction is performed by applying the method of obtaining balance correction information and the apparatus for obtaining balance correction information of the present disclosure.
FIG. 2 is a diagram illustrating main steps of the method of obtaining balance correction information of the present disclosure.
FIG. 3 is a diagram illustrating a functional configuration of the apparatus for obtaining balance correction information of the present disclosure.
FIG. 4 is a diagram illustrating a method of obtaining runout information.

**Description of Embodiments**

Hereinafter, embodiments for carrying out the present invention will be described in detail with reference to the accompanying drawings. In the description of the drawings, the same elements are denoted by the same reference signs, and redundant description is omitted.

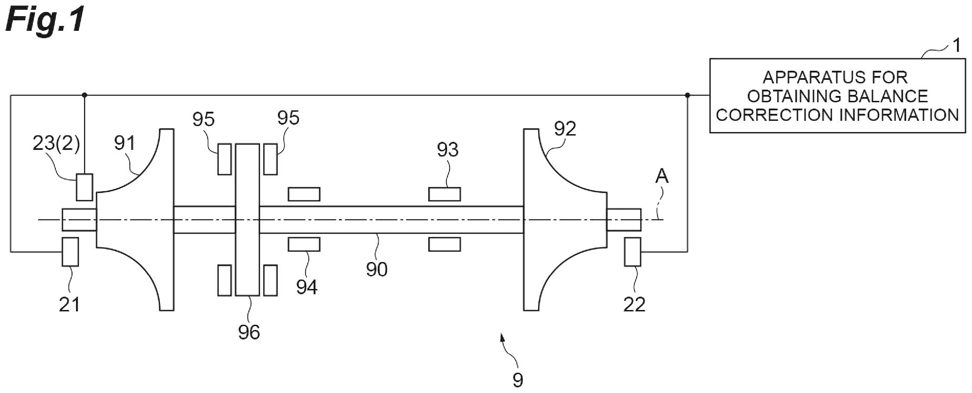

As shown in FIG. 1, the method of obtaining balance correction information and the apparatus for obtaining balance correction information 1 of the present disclosure are used to correct the balance of a rotating body 9 that rotates about an axis of rotation A. The rotating body 9 has a shaft 90 and two impellers 91 and 92. The rotating body 9 is, for example, a component of a supercharger. The rotating body 9 is rotatably supported by two journal bearings 93 and 94 and a pair of thrust bearings 95.

The journal bearings 93 and 94 are non-contact type bearings. For example, the journal bearings 93 and 94 are a type of gas bearing. The journal bearings 93 and 94 levitate during rotation by drawing fluid between the shaft 90 and the inner peripheral surfaces of the bearings. When the rotational speed is higher than a predetermined levitation rotational speed, the rotating body 9 does not physically contact the journal bearings 93 and 94.

Similarly, the thrust bearings 95 are a non-contact type bearing. For example, the thrust bearings 95 may be foil bearings using corrugated bump foils. When the shaft 90 rotates at a rotational speed higher than a predetermined rotational speed, fluid films are formed between a thrust collar 96 and the thrust bearings 95. Therefore, when the shaft 90 rotates at a rotational speed higher than the predetermined rotational speed, the rotating body 9 does not physically contact the thrust bearings 95.

When there is an imbalance in the mass distribution around the axis of rotation A, a centrifugal force corresponding to the unbalanced mass periodically acts on the rotating body 9. That is, the rotating body 9 may vibrate at a frequency corresponding to the rotational speed.

When the rotating body 9 is rotated about the axis of rotation A, due to non-uniformity of the outer shape with respect to the axis of rotation A, periodic fluctuations in displacement having a frequency corresponding to the rotational speed are detected by the displacement sensors 21 and 22. Therefore, the rotating body 9 appears to be vibrating. This apparent vibration is called runout.

When the rotating body 9 is rotated, the information on the periodic displacement detected by the displacement sensors 21 and 22 includes a component caused by dynamic unbalance and a component caused by runout. The balance correction of the rotating body 9 aims to reduce the component caused by dynamic unbalance. Therefore, if the output of the displacement sensors 21 and 22 includes a component caused by runout, the accuracy of the balance correction tends to decrease. The method of obtaining balance correction information and the apparatus for obtaining balance correction information and the apparatus for obtaining balance correction information 1 of the present disclosure suppress the influence of runout and obtain accurate balance correction information.

When the rotating body 9 is rotated at an extremely low speed, the centrifugal force decreases. Therefore, the magnitude of the component caused by dynamic unbalance is reduced. On the other hand, since the component caused by runout is due to the shape of the rotating body 9, its magnitude is not affected by the rotational speed. Therefore, it is conceivable to rotate the rotating body 9 at an extremely low speed in order to estimate the component caused by runout.

However, as described above, the rotating body 9 according to the present disclosure is supported by the non-contact type journal bearings 93 and 94. In order for the journal bearings 93 and 94 to be in a non-contact rotational support state, the rotational speed of the rotating body 9 must be higher than a predetermined levitation rotational speed. That is, it is difficult to estimate the component caused by runout by rotating the rotating body 9 at an extremely low speed.

Assume that the rotating body 9 is supported by a contact-type bearing such as a rolling bearing. In this case, the vibration of the rotating body 9 is transmitted to the bearing, and further transmitted to the housing to which the bearing is mounted Therefore, the vibration of the rotating body 9 supported by a contact-type bearing such as a rolling bearing can be indirectly detected by a sensor attached to the housing.

However, as repeatedly stated, the rotating body 9 according to the present disclosure is supported by the non-contact type journal bearings 93 and 94. The vibration of the rotating body 9 is not easily transmitted to the housing or the like via the journal bearings 93 and 94 or the thrust bearings 95. Therefore, for the vibration of the rotating body 9 according to the present disclosure, highly accurate measurement can be achieved by using the non-contact type displacement sensors 21 and 22 and the rotation pulse sensor 23.

The method of obtaining balance correction information and the apparatus for obtaining balance correction information 1 of the present disclosure are applicable to balance correction under such special conditions, and are capable of obtaining accurate balance correction results with a simple method. Hereinafter, the method of obtaining balance correction information and the apparatus for obtaining balance correction information 1 of the present disclosure will be described in detail.

Method of Correcting Balance

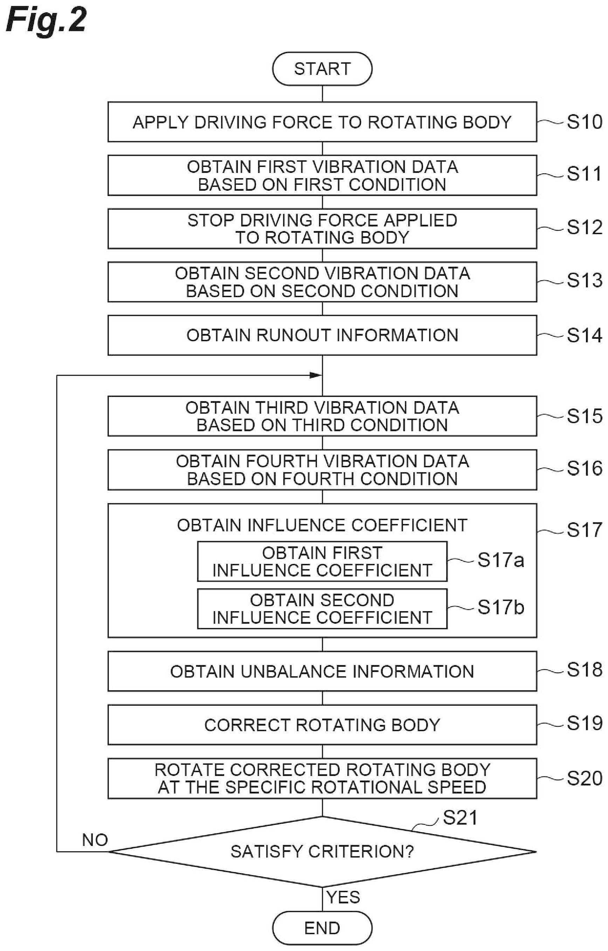

A method of correcting balance will be described with reference to FIG. 2. The method of obtaining balance correction information of the present disclosure is for the method of correcting balance. In order to correct the balance of the rotating body 9, balance correction information is necessary. The method of obtaining balance correction information of the present disclosure obtains balance correction information for correcting the balance. The method of correcting the balance mainly includes an operation of measuring the rotating body 9, an operation of obtaining balance correction information using data obtained by the measurement, and an operation of correcting the rotating body 9 according to the balance correction information.

By applying a driving force to the rotating body 9, the rotating body 9 is brought into a state of rotating at a specific rotational speed (S10). In step S10, no trial cutting is performed on the rotating body 9. In step S10, no trial weight is applied either. In the state of step S10, a driving force is applied, and the specific rotational speed is maintained even as time passes. The state of step S10 may be referred to as a forced rotation state. Therefore, a first condition is defined by the elements that "no trial cutting is performed and no trial weight is applied," "a driving force is applied," and "the rotational speed is the specific rotational speed." The specific rotational speed may be, for example, a rotational speed during steady-state operation set for the rotating body 9. At the specific rotational speed, the rotating body 9 is supported in a non-contact manner by the journal bearings 93 and 94 and the thrust bearings 95. That is, the rotating body 9 is levitating. Therefore, the specific rotational speed is higher than the levitation rotational speed.

Next, first vibration data V1 based on the first condition is obtained (S11). This step S11 is executed by the displacement sensors 21 and 22, the rotation pulse sensor 23, and the apparatus for obtaining balance correction information 1. In the step S11 of obtaining the first vibration data, it is not necessary that the driving force is constantly applied. The purpose of applying the driving force is to maintain the specific rotational speed. Therefore, as long as the specific rotational speed is maintained over time, it can be considered that the driving force is being applied. For example, during the period of obtaining the first vibration data, a period of applying the driving force and a period of stopping the driving force may be alternately repeated.

Next, the driving force applied to the rotating body 9 is stopped (S12).

Next, second vibration data V2 based on a second condition is obtained (S13). This step S13 is also executed by the displacement sensors 21 and 22, the rotation pulse sensor 23, and the apparatus for obtaining balance correction information 1. Unlike the step S11, during the period of obtaining the second vibration data, a driving force is never applied. As a result, the rotational speed gradually decreases over time. That is, the state of step S13 may be referred to as a free rotation state. Therefore, the second condition is defined by the elements that "no trial cutting is performed and no trial weight is applied," "no driving force is applied," and "the rotational speed gradually decreases." After obtaining the second vibration data V2, the rotation of the rotating body 9 is completely stopped.

The rotational speed when obtaining the second vibration data V2 is lower than the specific rotational speed. In the following description, the rotational speed when obtaining the second vibration data V2 is referred to as a "low-range rotational speed" for convenience. For example, the low-range rotational speed may be a value predetermined by a preliminary test in advance. The low-range rotational speed may be a value lower than the primary critical rotational speed of the rotating body 9. If the levitation rotational speed of the journal bearings 93 and 94 is known, a value in the vicinity of the levitation rotational speed may be set as the low-range rotational speed. That is, a value slightly higher than the levitation rotational speed may be set as the low-range rotational speed. A value equal to the levitation rotational speed may be set as the low-range rotational speed. A value slightly lower than the levitation rotational speed may be set as the low-range rotational speed.

From another perspective, it is desirable that the low-range rotational speed be as low as possible. The rotational speed in the low-speed range does not need to be constant, but it is desirable to avoid sudden changes in the rotational speed. The low-range rotational speed may be the lowest possible rotational speed at which the rotating body 9 can rotate smoothly.

Next, runout information is obtained (S14). This step S14 is executed by the apparatus for obtaining balance correction information 1. A specific process for obtaining runout information executed by the apparatus for obtaining balance correction information 1 will be described later.

Next, third vibration data V3 based on a third condition is obtained (S15). This step S15 is also executed by the displacement sensors 21 and 22, the rotation pulse sensor 23, and the apparatus for obtaining balance correction information 1. Trial cutting is performed on the rotating body 9. In the step S15, a portion corresponding to a first axial position of the rotating body 9 is cut. A driving force is applied to the rotating body 9 on which the trial cutting has been performed, and the rotating body 9 on which the trial cutting has been performed is rotated at the specific rotational speed. The state of rotation in the step S15 is the same as that in the step S11, and the step S15 differs from the step S11 only in that trial cutting is performed on the rotating body 9. Therefore, the third condition is defined by the elements that "a portion corresponding to the first axial position of the rotating body 9 is cut by performing trial cutting," "a driving force is applied," and "the rotational speed is the specific rotational speed." After obtaining the third vibration data V3, the rotation of the rotating body 9 is completely stopped.

Next, fourth vibration data V4 based on a fourth condition is obtained (S16). This step S16 is also executed by the displacement sensors 21 and 22, the rotation pulse sensor 23, and the apparatus for obtaining balance correction information 1. Trial cutting is also performed in this step S16. The trial cutting in the step S16 cuts a portion corresponding to a second axial position different from the first axial position. Then, a driving force is applied to the rotating body 9 on which the trial cutting has been performed, and the rotating body 9 on which the trial cutting has been performed is rotated at the specific rotational speed. The state of rotation in the step S16 is the same as that in the steps S11 and S15. The step S16 differs from the step S11 only in that portions corresponding to the first axial position and the second axial position are cut. The step S16 differs from the step S15 in the position that is cut by the trial cutting. Therefore, the fourth condition is defined by the elements that "portions corresponding to the first axial position and the second axial position of the rotating body 9 are cut by performing trial cutting" and "the rotational speed is the specific rotational speed." After obtaining the fourth vibration data V4, the rotation of the rotating body 9 is completely stopped.

Next, an influence coefficient is obtained (S17). The step S17 is executed by the apparatus for obtaining balance correction information 1. A specific process for obtaining the influence coefficient executed by the apparatus for obtaining balance correction information 1 will be described later.

Next, unbalance information is obtained (S18). The step S18 is also executed by the apparatus for obtaining balance correction information 1. A specific process for obtaining the unbalance information executed by the apparatus for obtaining balance correction information 1 will be described later.

Next, the rotating body 9 is corrected (S19). The step S19 is performed by an operator. The operator corrects the rotating body 9 based on the unbalance information obtained from the apparatus for obtaining balance correction information 1. Specifically, using the unbalance information, a correction mass and a position (phase) at which to apply the correction mass are determined. The balance correction information includes the correction mass and the position at which to apply the correction mass. The method of obtaining balance correction information and the apparatus for obtaining balance correction information of the present disclosure obtain, as the balance correction information, the information itself including the correction mass and the position at which to apply the correction mass, or information that indirectly presents such information.

Next, the corrected rotating body 9 is rotated at the specific rotational speed (S20). In the step S20, vibration measurement is performed again on the corrected rotating body 9 under the first condition.

It is determined whether the result of the vibration data in the step S20 satisfies a criterion (S21). If the result of the vibration data in the step S20 satisfies the criterion (step S21: YES), the operation of correcting the balance of the rotating body 9 is completed. If the result of the vibration data in the step S20 does not satisfy the criterion (step S21: NO), the process may be performed again from the step S15.

**Apparatus for Obtaining Balance Correction Information**

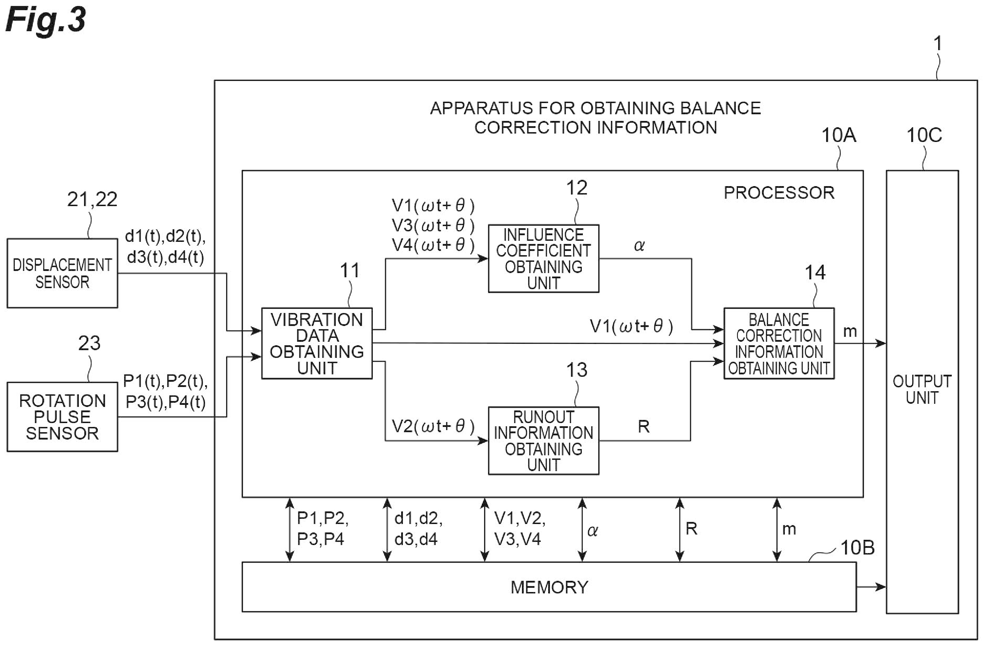

The apparatus for obtaining balance correction information 1 will be described. As shown in FIG. 3, the apparatus for obtaining balance correction information 1 is physically a computer. A processor 10A included in the computer executes a program that defines a series of processes for obtaining balance correction information m using displacement data d and rotation pulse data P. As a result, several functional components constituting the apparatus for obtaining balance correction information 1 are implemented.

As shown in FIG. 3, the apparatus for obtaining balance correction information 1 receives displacement data d from the displacement sensors 21 and 22. The apparatus for obtaining balance correction information 1 receives rotation pulse data P from the rotation pulse sensor 23. The apparatus for obtaining balance correction information 1 obtains balance correction information m using the displacement data d and the rotation pulse data P. The apparatus for obtaining balance correction information 1 presents the balance correction information m to an operator.

The apparatus for obtaining balance correction information 1 has, as functional components, a vibration data obtaining unit 11, an influence coefficient obtaining unit 12, a runout information obtaining unit 13, and a balance correction information obtaining unit 14. These functional components are implemented by the processor 10A executing a predetermined program. In addition to the processor 10A, the apparatus for obtaining balance correction information 1 has a memory 10B that stores various data required for the processing of these functional components. The memory 10B recieves data from the functional components. Furthermore, the memory 10B passes the stored data to the requesting functional component in response to a request from the functional component. The functional components may exchange data with each other. The functional components may indirectly exchange data via the memory 10B without directly exchanging data with each other.

The vibration data obtaining unit 11 receives the displacement data d and the rotation pulse data P. The vibration data obtaining unit 11 may receive the displacement data d directly from the displacement sensors 21 and 22. The vibration data obtaining unit 11 may receive the displacement data d stored in the memory 10B from the memory 10B. The vibration data obtaining unit 11 may receive the rotation pulse data P directly from the rotation pulse sensor 23. The vibration data obtaining unit 11 may receive the rotation pulse data P stored in the memory 10B from the memory 10B. The vibration data obtaining unit 11 obtains vibration data V using the displacement data d and the rotation pulse data P. The vibration data obtaining unit 11 outputs the vibration data V to the influence coefficient obtaining unit 12, the runout information obtaining unit 13, and the balance correction information obtaining unit 14. The vibration data obtaining unit 11 may output the vibration data V to the memory 10B. The vibration data obtaining unit 11 executes the steps S11, S13, S15, and S16 shown in the flowchart of FIG. 2.

The vibration data obtaining unit 11 obtains first vibration data V1 using first displacement data d and first rotation pulse data P obtained under the first condition. Similarly, it obtains second, third, and fourth vibration data V2 to V4 using second, third, and fourth displacement data d2 to d4 and second, third, and fourth rotation pulse data P2 to P4, which are obtained under the second, third, and fourth conditions. The displacement data d is data in which time and displacement are associated with each other. The rotation pulse data P is data in which time and phase are associated with each other. The vibration data V is defined by the displacement (amplitude) indicated by the displacement data d and the phase indicated by the rotation pulse data P.

The influence coefficient obtaining unit 12 receives the vibration data V from the vibration data obtaining unit 11. The influence coefficient obtaining unit 12 may receive the vibration data V from the memory 10B. The influence coefficient obtaining unit 12 obtains an influence coefficient $\alpha$ using the vibration data V. The influence coefficient obtaining unit 12 outputs the influence coefficient $\alpha$ to the balance correction information obtaining unit 14. The influence coefficient obtaining unit 12 may output the influence coefficient $\alpha$ to the memory 10B. The influence coefficient obtaining unit 12 executes the step S17 shown in the flowchart of FIG. 2.

The influence coefficient obtaining unit 12 obtains a first influence coefficient $\alpha$ using the first vibration data V1 obtained from the rotating body 9 on which no trial cutting has been performed and to which no trial weight has been applied, and the third vibration data V3 obtained from the rotating body 9 on which a portion corresponding to the first axial position has been cut (step S17a). The influence coefficient obtaining unit 12 obtains a second influence coefficient $\alpha$ using the third vibration data V3 obtained from the rotating body 9 on which the portion corresponding to the first axial position has been cut, and the fourth vibration data V4 obtained from the rotating body 9 on which the portion corresponding to the second axial position has been further cut in addition to the first axial position (step S17b). For the process of obtaining the influence coefficient using the vibration data obtained from the rotating body 9 on which no trial cutting has been performed and to which no trial weight has been attached, and the vibration data obtained from the rotating body 9 on which trial cutting has been performed, a known method may be used.

The runout information obtaining unit 13 receives the second vibration data V2 from the vibration data obtaining unit 11. The runout information obtaining unit 13 may receive the second vibration data V2 from the memory 10B. The runout information obtaining unit 13 obtains runout information R using the second vibration data V2. The runout information obtaining unit 13 outputs the runout information R to the balance correction information obtaining unit 14. The runout information obtaining unit 13 may output the runout information R to the memory 10B. The runout information obtaining unit 13 executes the step S14 shown in the flowchart of FIG. 2.

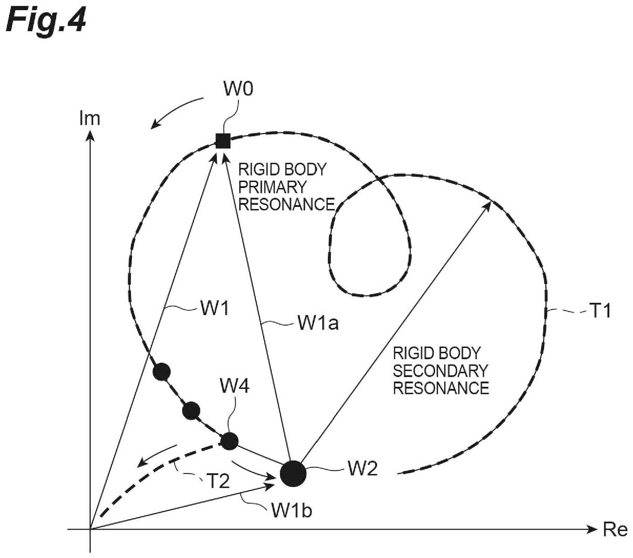

For example, the vibration data V itself at a low rotational speed may be regarded as the runout information. FIG. 4 is a diagram illustrating the state of vibration when the rotational speed gradually decreases from the specific rotational speed. The vibration data can be represented using imaginary numbers. In FIG. 4, the horizontal axis indicates real numbers. The vertical axis indicates imaginary numbers. The vibration when rotating at a certain rotational speed can be represented as a point on a first trajectory T1. A vector connecting a point on the first trajectory T1 and the origin is defined. The magnitude of the vector indicates the amplitude of the vibration. The angle of the vector indicates the phase of the vibration.

For example, suppose that the vibration when rotating at a certain rotational speed is indicated by a point WO. At this time, the vibration data V can be expressed by the magnitude of a vector W1 and the angle (phase) of the vector W1. The vibration data V represented by the vector W1 includes a component caused by dynamic unbalance and a component caused by runout. Referring to FIG. 4, it can be seen that the vector W1 indicating the vibration data V is the sum of the vector component W1a caused by dynamic unbalance and the vector component W1b caused by runout. The magnitude (amplitude of vibration) and phase of the vector component W1a caused by dynamic unbalance change according to the rotational speed. On the other hand, the magnitude and phase of the vector component W1b caused by runout are not affected by the rotational speed. The magnitude and phase of the vector component W1b caused by runout are always constant.

As the rotational speed decreases, the first trajectory T1 converges toward a point W2. The point W2 indicates the true runout. However, in reality, the first trajectory T1 never reaches the point W2. This is because the rotating body 9 is supported by the non-contact type journal bearings 93 and 94, and in a region below the levitation rotational speed, the shaft 90 contacts the journal bearings 93 and 94. This contact causes the vibration state of the rotating body 9 to change. The manner in which the vibration state of the rotating body 9 changes is indicated by a second trajectory T2.

Therefore, a point W4 where the first trajectory T1 switches to the second trajectory T2 is defined as a discontinuous point. Then, the vibration data at a rotational speed in the vicinity of the discontinuous point is treated as the runout information R. Even with the determination of the runout information R decided in this way, a sufficiently effective result can be obtained for the correction of the dynamic balance.

For example, each time the second vibration data V2 is obtained, the rotational speed of the point to be selected as runout may be determined each time by drawing the diagram shown in FIG. 4. When performing balance correction for a plurality of rotating bodies 9, the rotational speed of the point to be selected for runout is determined by drawing the diagram shown in FIG. 4 for a certain rotating body 9. Then, another rotating body 9 may use the already determined rotational speed as the low-range rotational speed, and obtain the runout information R from the vibration data V corresponding to that rotational speed.

The balance correction information obtaining unit 14 receives the vibration data V from the vibration data obtaining unit 11, receives the influence coefficient $\alpha$ from the influence coefficient obtaining unit 12, and receives the runout information R from the runout information obtaining unit 13. The balance correction information obtaining unit 14 may receive the vibration data V, the influence coefficient $\alpha$, and the runout information R from the memory 10B. The balance correction information obtaining unit 14 obtains balance correction information m using the vibration data V, the influence coefficient $\alpha$, and the runout information R. The balance correction information obtaining unit 14 outputs the balance correction information m. For example, the balance correction information obtaining unit 14 may output the balance correction information m to the memory 10B. The balance correction information obtaining unit 14 may output the balance correction information m via an output unit 10C constituting the apparatus for obtaining balance correction information 1. An example of the output unit 10C is a display.

The vibration data V, the influence coefficient $\alpha$, the runout information R, and the unbalance information are defined by the following equation (1). In equation (1), V, R, and m represent vectors. $\alpha$ represents a matrix.

$$V = \alpha m + R \ ... \ (1)$$

Equation (1) includes four elements. The vibration data V, the influence coefficient $\alpha$, and the runout information R are known. The unbalance information is an unknown variable. Therefore, by substituting the vibration data V, the influence coefficient $\alpha$, and the runout information R into equation (1), the unbalance information can be obtained. The balance correction information m can be obtained to reduce this unbalance information. For example, the balance correction information m may be obtained to make the unbalance information zero.

By the way, in some rotating machines including the rotating body 9, the rotating body 9 cannot be taken out without disassembling the machine. In this case, the balance correction of the rotating body 9 is performed with the rotating body 9 assembled to a stationary structure. At that time, the vibration data is generally obtained from a sensor provided on the stationary structure. However, especially when the rotating body 9 is supported by a non-contact type gas bearing, sufficient balance accuracy may not be achieved with the vibration data of the stationary structure part. Therefore, the vibration of the rotating body 9 is measured using a non-contact displacement sensor. The vibration data measured by the non-contact displacement sensor includes not only the vibration component of the rotating body but also the runout of the vibration measurement part. The runout of the vibration measurement part includes mechanical runout and electromagnetic runout. Therefore, when performing balance correction using the result of vibration measurement obtained by the non-contact displacement sensor, it is necessary to identify not only the unbalance but also the runout. To identify the unbalance and the runout, vibration data at two or more rotational speeds is used.

A high-speed rotating machine in which the rotating body 9 is supported by a gas bearing cannot continue to operate in a low-speed rotation range because a gas film is not formed. Also, vibration data acquired when the rotating body 9 is not sufficiently levitated cannot be used for identifying the unbalance. The levitation rotational speed is often relatively high. Therefore, if one tries to identify the unbalance and the runout using vibration data obtained when the rotational speed is equal to or higher than the levitation rotational speed, sufficient accuracy may not be obtained in the identification of the runout.

The method of obtaining balance correction information and the apparatus for obtaining balance correction information 1 of the present disclosure have been conceived in view of the above problems.

Operation and Effects

The method of obtaining balance correction information m of the present disclosure comprises: the step S11 of obtaining first vibration data V1 along a direction intersecting the axis of rotation A, when the rotating body 9 is rotating at the specific rotational speed without the trial weight being applied to the rotating body 9 and without trial cutting being performed on the rotating body 9; the step S13 of obtaining second vibration data V2 along a direction intersecting the axis of rotation A, when the rotating body 9 is rotating at the low-range rotational speed lower than the specific rotational speed without the trial weight being applied to the rotating body 9 and without the trial cutting being performed on the rotating body 9; the step S15 of obtaining third vibration data V3 along a direction intersecting the axis of rotation A, when the rotating body 9 on which trial cutting has been performed at a first correction position is rotating at the specific rotational speed; the step S17a of obtaining the first influence coefficient $\alpha$ indicating a degree of an effect that the trial cutting at the first correction position has on vibration of the rotating body 9, using the first vibration data V1 and the third vibration data V3; the step S14 of obtaining runout information R indicating a degree of runout caused by a shape of the rotating body 9, using the second vibration data V2; and the step S18 of obtaining the balance correction information using the first vibration data V1, the influence coefficient α, and the runout information R.

The apparatus for obtaining balance correction information 1 of the present disclosure comprises: the vibration data obtaining unit 11 configured to receive: the first vibration data V1 along a direction intersecting the axis of rotation A, when the rotating body 9 is rotating at the specific rotational speed without the trial weight being applied and without trial cutting being performed; the second vibration data V2 along a direction intersecting the axis of rotation A, when the rotating body 9 is rotating at the low-range rotational speed lower than the specific rotational speed without the trial weight being applied and without trial cutting being performed; and the third vibration data V3 along a direction intersecting the axis of rotation A, when the rotating body 9 on which trial cutting has been performed at a first correction position is rotating at the specific rotational speed; the influence coefficient obtaining unit 12 configured to obtain the first influence coefficient α indicating a degree of an effect that the trial cutting at the first correction position has on vibration of the rotating body 9, using the first vibration data V1 and the third vibration data V3; the runout information obtaining unit 13 configured to obtain the runout information R indicating a degree of runout caused by a shape of the rotating body 9, using the second vibration data V2; and the balance correction information obtaining unit 14 configured to obtain the balance correction information using the first vibration data V1, the influence coefficient α, and the runout information R.

The method of obtaining balance correction information and the apparatus for obtaining balance correction information 1 obtain the runout information R using the second vibration data V2 along a direction intersecting the axis of rotation A when the rotating body 9 is rotating at the low-range rotational speed lower than the specific rotational speed without the trial weight being applied and without trial cutting being performed. As a result, the balance correction information m can be obtained with one less unknown variable than in the related art. That is, the balance correction information m can be obtained with a smaller number of measurement data. Therefore, highly accurate balance correction information m that takes runout into account can be easily obtained with a smaller number of measurement data.

In the step S11 of obtaining the first vibration data V1, the first vibration data V1 is obtained by applying a predetermined driving force to the rotating body 9 to bring the rotating body 9 into a forced rotation state of rotating at the specific rotational speed. The step S13 of obtaining the second vibration data V2 is performed after the step S11 of obtaining the first vibration data V1, and application of the predetermined driving force that was applied in the step S11 of obtaining the first vibration data V1 is stopped (S12), and the second vibration data V2 is obtained with the rotating body 9 in a free rotation state in which the rotational speed of the rotating body 9 gradually decreases. According to this step S13, accurate runout information can be obtained.

The method of obtaining balance correction information further comprises: the step S16 of obtaining the fourth vibration data V4 along a direction intersecting the axis of rotation A, when the rotating body 9 on which trial cutting has been performed at a second correction position different from the first correction position is rotating at the specific rotational speed; and the step S17b of obtaining the second influence coefficient α indicating a degree of an effect that the performance of the trial cutting has on vibration of the rotating body 9, using the third vibration data V3 and the fourth vibration data V4. According to these steps S16 and S17b, so-called two-plane balancing can be performed as the correction of the rotational balance.

Modifications

The examples of the method of obtaining balance correction information and the apparatus for obtaining balance correction information have been described above. The method of obtaining balance correction information and the apparatus for obtaining balance correction information are not limited to the above examples and may be implemented in various forms.

In the step S15 and the step S16, it is sufficient to cause a change in mass that brings about a change in the rotational balance of the rotating body 9. In the step S15 and the step S16 of the embodiment, the change in the rotational balance was caused by cutting the rotating body 9. For example, the change in the rotational balance of the rotating body 9 may be caused by attaching a trial weight.

In the step S15 of a first example, a first trial weight is attached to a first axial position. In the step S16 of the first example, a second trial weight different from the first trial weight is attached to a second axial position. In the step S16 of the first example, the weight attached in the step S15 is not removed. According to the first example, in the step S17a, the first influence coefficient α can be obtained using the first vibration data V1 and the third vibration data V3. In the step S17b, the second influence coefficient α can be obtained using the third vibration data V3 and the fourth vibration data V4.

In the step S15 of a second example, the first trial weight is attached to the first axial position. In the step S16 of the second example, the second trial weight different from the first trial weight is attached to the second axial position. In the step S16 of the second example, the weight attached in the step S15 is removed. According to the second example, in the step S17a, the first influence coefficient α can be obtained using the first vibration data V1 and the third vibration data V3. In the step S17b, the second influence coefficient α can be obtained using the first vibration data V1 and the fourth vibration data V4.

The balance correction exemplified in the embodiment was a so-called two-plane balancing. The method of obtaining balance correction information described in the embodiment can also be applied to a so-called single-plane balancing. In this case, the step S16 and the step S17b in the flow shown in FIG. 2 are omitted.

The works performed in the step S15 and the step S16 to bring about a change in the rotational balance of the rotating body 9 may be the same or different from each other. For example, in the step S15, trial cutting may be performed, and in the step S16, the trial weight may be attached. For example, in the step S15, the trial weight may be attached, and in the step S16, trial cutting may be performed.

For example, when the rotating body 9 is a machine integrated with a drive mechanism such as an electric motor, in the step S13, operation at an extremely low speed and for a short time may be performed to obtain vibration data for obtaining runout information.

For example, when the rotating body 9 is a machine not integrated with a drive mechanism such as an electric motor, in the step S13, for example, an electric motor may be temporarily connected. Then, operation at an extremely low speed and for a short time may be performed to obtain vibration data for obtaining runout information.

**Reference Signs List**

1       Apparatus for obtaining balance correction information
9       Rotating body
11      Vibration data obtaining unit
12      Influence coefficient obtaining unit
13      Runout information obtaining unit
14      Balance correction information obtaining unit
A       Axis of rotation
V1      First vibration data
V2      Second vibration data
V3      Third vibration data
m       Balance correction information
R       Runout information
$\alpha$       Influence coefficient

**Claims**

1.  A method of obtaining balance correction information for correcting a dynamic unbalance of a rotating body rotatably supported by a non-contact type bearing and rotating about an axis of rotation, the method comprising:

    obtaining first vibration data along a direction intersecting the axis of rotation, when the rotating body is rotating at a specific rotational speed without a trial weight being applied to the rotating body and without trial cutting being performed on the rotating body;
    obtaining second vibration data along a direction intersecting the axis of rotation, when the rotating body is rotating at a low-range rotational speed lower than the specific rotational speed without the trial weight being applied to the rotating body and without the trial cutting being performed on the rotating body;
    obtaining third vibration data along a direction intersecting the axis of rotation, when the rotating body to which the trial weight has been applied at a first correction position is rotating at the specific rotational speed, or when the rotating body on which the trial cutting has been performed at the first correction position is rotating at the specific rotational speed;
    obtaining a first influence coefficient indicating a degree of an effect that the application of the trial weight or the performance of the trial cutting has on vibration of the rotating body, using the first vibration data and the third vibration data;
    obtaining runout information indicating a degree of runout caused by a shape of the rotating body, using the second vibration data; and
    obtaining the balance correction information using the first vibration data, the influence coefficient, and the runout information.

2.  The method of obtaining balance correction information according to claim 1,

    wherein the step of obtaining the first vibration data acquires the first vibration data by applying a predetermined driving force to the rotating body to bring the rotating body into a forced rotation state of rotating at the specific rotational speed, and
    wherein the step of obtaining the second vibration data is performed after the step of obtaining the first vibration data, and acquires the second vibration data by stopping application of the predetermined driving force that was applied in the step of obtaining the first vibration data to bring the rotating body into a free rotation state in which the rotational speed of the rotating body gradually decreases.

3.  The method of obtaining balance correction information according to claim 1 or 2, further comprising:

    obtaining fourth vibration data along a direction intersecting the axis of rotation, when the rotating body to which the trial weight has been applied at a second correction position different from the first correction position is rotating at the specific rotational speed, or when the rotating body on which the trial cutting has been performed at the second correction position is rotating at the specific rotational speed; and obtaining a second influence coefficient indicating a degree of an effect that the application of the trial weight or the performance of the trial cutting has on vibration of the rotating body, using the third vibration data and the fourth vibration data.

4. The method of obtaining balance correction information according to claim 1,

   wherein the specific rotational speed is higher than a levitation rotational speed at which the rotating body levitates from the bearing, and wherein the low-range rotational speed is lower than the levitation rotational speed.

5. The method of obtaining balance correction information according to claim 1,

   wherein the specific rotational speed is higher than a primary critical rotational speed of the rotating body, and wherein the low-range rotational speed is lower than the primary critical rotational speed of the rotating body.

6. An apparatus for obtaining balance correction information for correcting a dynamic unbalance of a rotating body rotatably supported by a non-contact type bearing and rotating about an axis of rotation, the apparatus comprising:

   a vibration data obtaining unit configured to receive:

      first vibration data along a direction intersecting the axis of rotation, when the rotating body is rotating at a specific rotational speed without a trial weight being applied to the rotating body and without trial cutting being performed on the rotating body;
      second vibration data along a direction intersecting the axis of rotation, when the rotating body is rotating at a low-range rotational speed lower than the specific rotational speed without the trial weight being applied to the rotating body and without the trial cutting being performed on the rotating body; and
      third vibration data along a direction intersecting the axis of rotation, when the rotating body to which the trial weight has been applied at a first correction position is rotating at the specific rotational speed, or when the rotating body on which the trial cutting has been performed at the first correction position is rotating at the specific rotational speed;

   an influence coefficient obtaining unit configured to obtain a first influence coefficient indicating a degree of an effect that the application of the trial weight or the performance of the trial cutting has on vibration of the rotating body, using the first vibration data and the third vibration data;
   a runout information obtaining unit configured to obtain runout information indicating a degree of runout caused by a shape of the rotating body, using the second vibration data; and
   a balance correction information obtaining unit configured to obtain the balance correction information using the first vibration data, the influence coefficient, and the runout information.

**Fig.1**

# Fig.2

```
                    ( START )
                        │
┌──────────────────────────────────────────┐
│  APPLY DRIVING FORCE TO ROTATING BODY      │～S10
└──────────────────────────────────────────┘
                        │
┌──────────────────────────────────────────┐
│      OBTAIN FIRST VIBRATION DATA           │～S11
│       BASED ON FIRST CONDITION             │
└──────────────────────────────────────────┘
                        │
┌──────────────────────────────────────────┐
│     STOP DRIVING FORCE APPLIED             │～S12
│        TO ROTATING BODY                    │
└──────────────────────────────────────────┘
                        │
┌──────────────────────────────────────────┐
│     OBTAIN SECOND VIBRATION DATA           │～S13
│      BASED ON SECOND CONDITION             │
└──────────────────────────────────────────┘
                        │
┌──────────────────────────────────────────┐
│        OBTAIN RUNOUT INFORMATION           │～S14
└──────────────────────────────────────────┘
                        │
                        │◄───────────────┐
                        │                │
┌──────────────────────────────────────────┐
│      OBTAIN THIRD VIBRATION DATA           │～S15
│       BASED ON THIRD CONDITION             │
└──────────────────────────────────────────┘
                        │                │
┌──────────────────────────────────────────┐
│     OBTAIN FOURTH VIBRATION DATA           │～S16
│      BASED ON FOURTH CONDITION             │
└──────────────────────────────────────────┘
                        │                │
┌──────────────────────────────────────────┐
│       OBTAIN INFLUENCE COEFFICIENT         │～S17
│   ┌──────────────────────────────────┐    │
│   │        OBTAIN FIRST               │～S17a│
│   │   INFLUENCE COEFFICIENT           │    │
│   └──────────────────────────────────┘    │
│   ┌──────────────────────────────────┐    │
│   │       OBTAIN SECOND               │～S17b│
│   │  INFLUENCE COEFFICIENT            │    │
│   └──────────────────────────────────┘    │
└──────────────────────────────────────────┘
                        │                │
┌──────────────────────────────────────────┐
│       OBTAIN UNBALANCE INFORMATION         │～S18
└──────────────────────────────────────────┘
                        │                │
┌──────────────────────────────────────────┐
│          CORRECT ROTATING BODY             │～S19
└──────────────────────────────────────────┘
                        │                │
┌──────────────────────────────────────────┐
│    ROTATE CORRECTED ROTATING BODY          │～S20
│   AT THE SPECIFIC ROTATIONAL SPEED         │
└──────────────────────────────────────────┘
                        │                │
                        │         ～S21   │
            NO        ◇─────────────◇     │
       ┌──────────────│ SATISFY CRITERION? │──┘
       │              ◇─────────────◇
       │                    │
       │                   YES
                        ( END )
```

**Fig.3**

APPARATUS FOR OBTAINING BALANCE CORRECTION INFORMATION

*Fig.4*

## INTERNATIONAL SEARCH REPORT

| International application No. |
| --- |
| **PCT/JP2024/018167** |

**A. CLASSIFICATION OF SUBJECT MATTER**

*G01M 1/22*(2006.01)i
FI: G01M1/22

According to International Patent Classification (IPC) or to both national classification and IPC

**B. FIELDS SEARCHED**

Minimum documentation searched (classification system followed by classification symbols)

G01M1/00-1/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 5164624 B2 (THE CHUGOKU ELECTRIC POWER CO., INC.) 21 March 2013 (2013-03-21)<br>paragraphs [0025]-[0044], fig. 1-9 | 1-6 |
| A | JP 8-30669 B2 (GENERAL ELECTRIC COMPANY) 27 March 1996 (1996-03-27)<br>column 10, line 20 to column 12, line 47, fig. 1-7 | 1-6 |
| A | JP 5622178 B2 (IHI CORP.) 12 November 2014 (2014-11-12)<br>paragraphs [0018]-[0054], fig. 1-3 | 1-6 |
| A | JP 3764251 B2 (MATSUSHITA ELECTRIC INDUSTRIAL CO., LTD.) 05 April 2006 (2006-04-05)<br>paragraphs [0018]-[0021], fig. 1 | 1-6 |
| A | JP 2012-73121 A (IHI CORP.) 12 April 2012 (2012-04-12)<br>paragraphs [0017]-[0038], fig. 1 | 1-6 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 July 2024** | **30 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/018167** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2019/0242774 A1 (SCHENCK ROTEC GMBH) 08 August 2019 (2019-08-08) paragraphs [0028]-[0036], fig. 1 | 1-6 |

Form PCT/ISA/210 (second sheet) (July 2022)

## INTERNATIONAL SEARCH REPORT
### Information on patent family members

International application No.

**PCT/JP2024/018167**

| Patent document cited in search report | | | Publication date (day/month/year) | Patent family member(s) | | | Publication date (day/month/year) |
|---|---|---|---|---|---|---|---|
| JP | 5164624 | B2 | 21 March 2013 | (Family: none) | | | |
| JP | 8-30669 | B2 | 27 March 1996 | US<br>column 3, line 66 to column 6,<br>line 22, fig. 1-7<br>GB<br>DE<br>FR | 5214585<br><br><br>2233772<br>4019721<br>2649174 | A<br><br><br>A<br>A1<br>A1 | |
| JP | 5622178 | B2 | 12 November 2014 | (Family: none) | | | |
| JP | 3764251 | B2 | 05 April 2006 | US<br>column 4, line 28 to column 6,<br>line 25, fig. 1<br>CN | 5864238<br><br><br>1177734 | A<br><br><br>A | |
| JP | 2012-73121 | A | 12 April 2012 | (Family: none) | | | |
| US | 2019/0242774 | A1 | 08 August 2019 | DE<br><br>FR<br>CN | 102018102751<br><br>3077638<br>110118632 | B3<br><br>A1<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7270229 A